# EUROPÄISCHE PATENTSCHRIFT

(11) **EP 2 017 243 B1**
(45) Veröffentlichungstag und Bekanntmachung des Hinweises auf die Patenterteilung: **16.03.2016**
(21) Anmeldenummer: 07110020.0
(22) Anmeldetag: 11.06.2007
(51) Int. Cl.: C05G 3/00, C05C 3/00, C05D 9/00

(54) **STRUKTURGEBENDER DÜNGER ZUR STEIGERUNG DER WASSERHALTEKAPAZITÄT**
STRUCTURE-BEARING FERTILISER FOR IMPROVING WATER RETENTION
ENGRAIS DONNANT UNE STRUCTURE DESTINÉ À L'AUGMENTATION DE LA CAPACITÉ DE CONSERVATION DE L'EAU

(43) Veröffentlichungstag der Anmeldung: 21.01.2009
(73) Patentinhaber: Landesbetrieb Hessisches Landeslabor, 35392 Giessen (DE); Eckard, Horst K., 36169 Rasdorf (DE); Grimm, Arnold, 36154 Hosenfeld (DE); Hemschemeier, Hans, 51647 Gummersbach (DE)
(72) Erfinder: Eckart, Horst K., 36169 Rasdorf (DE); Grimm, Arnold, 36154 Hosenfeld (DE); Hemschemeier, Hans, 51647 Gummersbach (DE); Zerr, Walter, 36251 Ludwigsau (DE)
(74) Vertreter: Patentanwälte Olbricht Buchhold Keulertz

(56) Entgegenhaltungen:
- EP-A- 0 052 526
- EP-A- 0 072 214
- WO-A-97/06121
- DE-C1- 3 800 814
- GB-A- 270 957
- GB-A- 2 129 785
- US-A- 3 640 696
- US-A- 5 458 877
- US-A1- 2006 217 267

## Beschreibung

Die Erfindung betrifft einen Dünger, der die Struktur von Böden im Sinne einer Erhöhung der Wasserhaltekapazität verbessert.

Die Bepflanzung nährstoffarmer Böden mit geringer Wasserhaltekapazität, wie sie oft in ariden Gebieten anzutreffen sind, ist problematisch. Niederschläge versickern rasch oder verdunsten und sind für Pflanzen deshalb nicht verfügbar.

Aus der WO 97/06121 ist ein geruchsfreies Düngemittel aus 50-95 Gew.-% organischem Abfall, 5-50 Gew.-% natürlicher Tonerde und nicht-mineralischem Öl bekannt. Der organische Abfall kann verrottete Gülle sein und die natürliche Tonerde kann Kieselgur sein. Die Gülle und die Kieselgur werden gemischt und danach getrocknet.

Die EP 0 052 526 A1 beschreibt ein Gefäß zur Einpflanzung, das mit 25-95 Gew.-% elastischem Polymerschaumstoff, einem hydrophilen Stoff und Düngemittel gefüllt ist. Der Schaumstoff ist in einer flexiblen Tasche aus Polyethylen oder PVC versiegelt.

Ferne schlägt die GB 270,957 einen Dünger vor, enthaltend ein Drittel Reststoffe aus Vergärung von Melasse von Roter Bete, ein Drittel Kieselgur, und ein Drittel Phosphorit oder Calciumsulfat. Die Zusammensetzung wird gemischt bis ein homogenes weißliches Pulver erhalten wird.

Die US 2006/0217267 A1 zeigt einen Granulat- oder Pelletdünger, enthaltend mindestens 4 Gew.-% eines Destillationsrückstandes einer Rohrzuckervergärung als Trockensubstanz und 5-96 Gew.-% eines festen Trägermaterials wie Ton oder Silikat.

Die GB 2 129 785 A beschreibt ein Pflanzennährmedium auf der Basis von Meeresalgen mit partikulärem Nährmaterial und einem Anteil eines synthetischen Polymers, insbesondere ein Acrylamidpolymer. Für das Nährmaterial werden abgebaute organische Abfälle, insbesondere anaerob abgebaute Rindergülle, vorgeschlagen.

Die US 5,458,877 beschreibt eine Zusammensetzung für die Einpflanzung und Kultivierung von Pflanzen, enthaltend unter anderem 0,1 - 10 Gew.-% Gülle als Düngemittel im Verhältnis zum fertigen Bodenmaterial, 0,1 - 50 Gew.-% wasserabsorbierende Mitel wie Kieselsäure oder Kieselgur im Verhältnis zum fertigen Bodenmaterial und 0,01 - 3 Gew.-% wasserspeichernde Mittel wie Hydrogel im Verhältnis zum fertigen Bodenmaterial. Die Zusammensetzung steigert die Wasserhaltekapazität eines Bodens.

Es ist eine Aufgabe der Erfindung, einen verbesserten Dünger mit in Bezug auf die Verfügbarkeit für Pflanzen verbessertem Nährstoffgehalt, insbesondere auch einer verbesserten Nährstofffreisetung, zu schaffen, der bei Verteilung in einem Boden dessen Wasserhaltekapazität erhöht.

Die Erfindung sieht einen Dünger nach Anspruch 1 vor. Der Dünger enthält in Mischung fein verteilt, vorteilhaferweise in homogener, gleichmäßiger Mischung Gärgülle-Trockensubstanz und Kieselgur oder Kieselsäure. Bei der Kieselgur kann es sich um beispielsweise getrocknete Kieselgur oder bevorzugt gebrannte Kieselgur handeln.

Gärgülle, auch Biogasgülle genannt, fällt an, wenn Gülle oder Festmist gemeinsam mit einer oder mehreren anderen Biomassen anaerob vergoren wird oder werden, beispielsweise mit Mais, Gras, Zuckerrüben oder einem oder mehreren anderen nachwachsenden Rohstoff(en) oder mit Abfällen aus der Nahrungs-, Genuss- oder Futtermittelindustrie oder kommunalen oder privaten Bioabfällen. Gärgülle weist vorteilhafterweise einen höheren Ammonium (NH₄⁺)-Gehalt als Frischgülle auf. Ferner ist ein großer Teil der in den Ausgangsstoffen der Vergärung enthaltenen metallischen Kationen durch den Gärprozess freigesetzt und daher für Pflanzen rasch verfügbar. Im Ergebnis enthält Gärgülle im Vergleich mit Frischgülle einen höheren Anteil an pflanzenverfügbaren Nährstoffen. Charakteristisch für Gärgülle ist ferner ein gewisser Anteil nicht vergorener Organik, wie beispielsweise Strohreste, falls die organische Ausgangsmasse der Vergärung entsprechende Bestandteile enthielt.

Kieselgur wird als leichter und hochporöser Zusatzstoff insbesondere als Strukturverbesserer beigemischt. Des Weiteren saugt die Kieselgur Wasser auf und verbessert somit die Wasserhaltekapazität eines mit dem Dünger versetzten Bodens oder des Düngers als solchen.

Ein bevorzugter Mischungspartner ist auch Kieselsäure. Die Kieselsäure benetzt im Boden vorhandene Bodenpartikel, beispielsweise Sandkörner, und hält sie zusammen, verklebt sie sozusagen. Es entsteht oder verfestigt sich eine offenporige Bodenstruktur. Die Kieselsäure kleidet einen größeren Teil der Porenwände aus und verengt oder verstopft Porendurchlässe. Sie erschwert auf diese Weise das Durchsickern von Wasser, so dass die Wasserhaltekapazität des Bodens durch die Zugabe des Düngers gesteigert wird. Vorzugsweise wird gefällte Kieselsäure verwendet.

Der Dünger kann sowohl Kieselgur als auch Kieselsäure enthalten. Falls er nur einen dieser beiden Inhaltsstoffe aufweist, wird Kieselgur bevorzugt, insbesondere gebrannte Kieselgur. Der Dünger kann gebrannte Kieselgur und getrocknete Kieselgur auch in Kombination enthalten.

Der Dünger weist eine rieselfähige, beispielsweise pulver-, mehl- oder sandförmige Konsistenz auf, so dass er auf einfache Weise gleichmäßig verteilt auf einen zu behandelnden Boden aufgebracht, beispielsweise ausgestreut, oder mechanisch in eine oberflächennahe Bodenschicht eingearbeitet werden kann. Eine trockene, rieselförmige Mischung kann jedoch einfacher gelagert und transportiert werden. In einer ebenfalls bevorzugten Alternative ist der Dünger in einer Trägerstruktur verteilt. Trägerstruktur und Dünger bilden eine als Einheit wie ein einziger Körper handhabbare Kombination, die beispielsweise ähnlich einem Kunstrasen oder einer anderen Belagware ausgelegt werden kann und als solche einen Nährboden für Pflanzen bildet.

Der Dünger enthält wenigstens 4 Gew.%, besser noch wenigstens 5 bis 10 Gew.% Gärgülle-Trockensubstanz. Der Dünger enthält wenigstens 10 Gew.% Kieselgur. Vorzugsweise enthält er nicht mehr als 60 Gew.% Gärgülle-Trockensubstanz. Bei der Kieselgur wird ein Anteil von etwa 90 Gew.% als Obergrenze angesehen. Bevorzugte Obergrenzen sind für die Gärgülle-Trockensubstanz 40 Gew.% und für die Kieselgur 60 Gew.%, falls nur eine Art Kieselgur verwendet wird, und bis zu 80 Gew.%, falls der Dünger mehrere Arten in Kombination enthält.

In Relation zueinander weist der Dünger in bevorzugten Mischungen Gärgülle- Trockensubstanz und Kieselgur der gleichen Art, beispielsweise gebrannte Kieselgur, in einem Gewichtsverhältnis von 1:4 bis 1:6 auf, d. h. auf 1 g Gärgülle-Trockensubstanz kommen 4 bis 6 g Kieselgur. Vorteilhaft sind auch noch Gewichtsverhältnisse von wenigstens 1:16, also höchstens 12 g Kieselgur pro 1 g Gärgülle-Trockensubstanz, bevorzugter von wenigstens 1:10. Im Falle solch hoher relativer Anteile Kieselgur enthält der Dünger vorzugsweise unterschiedliche Arten Kieselgur in Kombination. Der Anteil der Gärgülle- Trockensubstanz relativ zur Kieselgur einer einzigen Art oder einer Kombination unterschiedlicher Arten kann nach oben noch vorteilhaft bis auf Gewichtsverhältnisse von 2:1 oder vorzugsweise höchstens 1:1 ausgedehnt werden, d. h. die Düngermischung kann auf 1 g Kieselgur durchaus bis zu 2 g Gärgülle- Trockensubstanz enthalten.

Tabelle 1 gibt bevorzugte Anteile der Inhaltsstoffe Gärgülle-Trockensubstanz und Kieselgur in Gew.% pro Mengeneinheit des Düngers und relativ zueinander in Gew.% Gärgülle-Trockensubstanz zu Gew.% Kieselgur an. Die Spalten "Min" und "Max" enthalten bevorzugte Unter- und Obergrenzen und die dritte Spalte besonders bevorzugte Bereiche:

**Tabelle 1 : Gewichtsanteile und Gewichtsverhältnis von Gärgülle-Trockensubstanz (GGTS) und Kieselgur (KG).**

| Inhaltsstoffe | Min | Max | bevorzugter Bereich |
|---|---|---|---|
| GGTS [Gew.%] | 4 | 60 | 5 bis 40 insbesondere 5 bis 30 |
| KG [Gew.%] | 10 | 90 | 20 bis 70 |
| Nur einer Art | | | insbesondere 20 bis 50 |
| KG [Gew.%] | | | |
| Mehrere Arten in Kombination | 10 | 90 | 30 bis 80 |
| GGTS:KG | 1 : 8 | 2 : 1 | 1 : 6 bis 1 : 1 |
| (eine Art KG) | | | |
| GGTS : KG | 1 : 16 | 2 : 1 | 1 : 12 bis 1 : 1 |
| (mehrere Arten KG) | | | |

Falls der Dünger Kieselsäure anstelle von Kieselgur enthält, gelten die vorstehenden Gew.%-Angaben und Relationen für Kieselsäure anstelle der Kieselgur nur der einen Art. Falls der Dünger beide Inhaltsstoffe in Kombination aufweist, gelten die Angaben für die Kombination unterschiedlicher Arten Kieselgur auch für die Kombination von Kieselgur und Kieselsäure. Das Verhältnis von Kieselgur : Kieselsäure beträgt für einen Dünger, der beide Mischungspartner enthält, vorzugsweise zwischen 5:1 und 1:3, bevorzugter zwischen 5: 1 und 1:2.

Der Dünger kann grundsätzlich aus den genannten Mischungspartnern bestehen, also aus Gärgülle-Trockensubstanz und entweder nur Kieselgur oder nur Kieselsäure oder aus Gärgülle-Trockensubstanz, Kieselgur und Kieselsäure. Bevorzugter enthält er jedoch zusätzlich ebenfalls fein verteilt Gesteinsmehl, vorzugsweise Basaltmehl, um den Gehalt an Mineralien, insbesondere metallischen Kationen (Spurenelemente), zu erhöhen. Er kann in gleichmäßig feiner Verteilung über die Gärgülle-Trockensubstanz hinaus insbesondere Kieselgur und Gesteinsmehl oder Kieselgur, Kieselsäure und Gesteinsmehl enthalten oder jeweils aus diesen Inhaltsstoffen bestehen..

Tabelle 2 enthält eine bevorzugte Untergrenze (Min) und eine bevorzugte Obergrenze (Max) für den Anteil des zur Kieselgur oder Kieselsäure optional zusätzlichen Mischungspartners Gesteinsmehl, jeweils in Gew.% der Einheitsmenge des Düngers. Ferner enthält sie bevorzugte Werte für das Gewichtsverhältnis des Gesteinsmehls zu der Gesamtmenge der beiden Mischungspartner Gärgülle-Trockensubstanz und Kieselgur und alternativ der Mischungspartner Gärgülle-Trockensubstanz und Kieselsäure:

**Tabelle 2 Anteile Gesteinsmehl (GM) in Gew.% der Düngereinheitsmenge und im Verhältnis zum Gesamtgewichtsanteil von Gärgülle-Trockensubstanz (GGTS) und Kieselgur (KG) oder Kieselsäure (KS).**

| Inhaltsstoffe | Min | Max | bevorzugter Bereich |
|---|---|---|---|
| GM [Gew.%] | 5 | 60 | 10 bis 40 |
| (GGTS + KG) : GM | | | |
| nur eine Art KG | 1 : 4 | 5 : 1 | 1 : 3 bis 2 : 1 |
| unterschiedliche Arten KG | 1 : 3 | 10 : 1 | 1 : 2 bis 6 : 1 |
| (GGTS + KS) : GM | 1 : 4 | 5 : 1 | 1 : 3 bis 2 : 1 |

Der Dünger kann auch ein Hydrogel in feiner Verteilung enthalten. Ein vorteilhafter Inhaltsstoff dieser Art ist Polyacrylamid (PAA). Allerdings wird es bevorzugt, wenn das Hydrogel, beispielsweise Polyacrylamid, höchstens 2 bis 3 Gew.% des Düngers ausmacht. PAA kann insbesondere in einem Dünger enthalten sei, der zur Begrünung einer Abraumhalde verwendet wird.

Der Dünger kann in der Mischung verteilt auch Pflanzensamen enthalten. Für eine Begrünung von stark geneigten Flächen wie beispielsweise Abraumhalden werden Samen für einen dichten Bewuchs bevorzugt, der pro Einheitsfläche nur ein geringes Gewicht aufweist. Für derartige Verwendungen werden Samen von beispielsweise Gräsern oder flach wachsenden Büschen bevorzugt, um Windkräften nur wenig Angriffsfläche zu bieten.

Für die Einarbeitung in einen Boden wird der Dünger vorzugsweise in einem trockenen Zustand ausgestreut und eingeschwämmt, entweder durch künstliche Bewässerung oder natürlichen Niederschlag. Der Boden kann vorher aufgelockert werden. In einer Variante wird der Boden in einer der Oberfläche nahen Schicht mit dem ausgestreuten Dünger umgegraben, um den Dünger vorzugsweise unverzüglich nach dem Ausstreuen einzuarbeiten und Verwehungen zu verhindern.

Der Dünger eignet sich nicht nur für die Einarbeitung oder, verallgemeinert, die Durchmischung mit dem vor Ort vorhandenen Bodenmaterial. Er kann mit Vorteil auch in einer Trägerstruktur mit offener Porosität eingebettet sein, entweder allein oder in einer Mischung gleichmäßig verteilt mit anderen Stoffen, die in diesem Fall das Bodenmaterial bilden, beispielsweise Erde oder Kompost. Die mit dem Dünger und gegebenenfalls einem oder mehreren weiteren Stoff(en) gefüllte Trägerstruktur, im folgenden "Träger-Dünger-Kombination" kann so beschaffen sein, dass sie auf der Straße, der Schiene oder per Schiff bereits fertig oder halbfertig für eine Verlegung auf einem Untergrund transportiert werden kann. Die Trägerstruktur kann stattdessen aber auch getrennt vom Dünger transportiert und erst am oder nahe bei dem Ort der Verlegung mit dem Dünger sowie gegebenenfalls weiteren Stoffen gefüllt werden. Zum Füllen wird der Dünger auf die Trägerstruktur aufgebracht und eingeschwämmt, zweckmäßigerweise mit Wasser. In einer ebenfalls bevorzugten Alternative wird eine den Dünger enthaltende Suspension bereitet und die Trägerstruktur in einem Bad mit der Suspension getränkt. Für eine Lagerung und insbesondere einen Transport als Fertig- oder Halbfertigprodukt ist es vorteilhaft, wenn der Trägerstruktur zumindest ein größerer Teil, bevorzugt ein überwiegender Teil der bei dem Einschwämmen oder Tränken aufgenommenen Flüssigkeit wieder entzogen wird, mechanisch oder thermisch, beispielsweise mittels einer maschinellen Pressbehandlung oder Trocknung oder durch Lagerung mit ausreichender Durchlüftung.

Der Dünger wird dem Bodenmaterial zugemischt, so dass er in gleichmäßiger Verteilung vorliegt. Sein Anteil beträgt im Gemisch aus Bodenmaterial und Dünger vorzugsweise wenigstens 0, 5 Gew.%, bevorzugter wenigstens 1 Gew.%. Sein Anteil beträgt im Gemisch vorzugsweise höchstens 10 Gew.%, bevorzugter höchstens 7 Gew.% und noch bevorzugter höchstens 5 Gew.%. Ein guter Kompromiss zwischen Preis und Steigerung der Bodenleistung sind Anteile von 2±1 Gew.%.

Für eine bevorzugte Verwendung zur Begrünung von beispielsweise Halden ist die Trägerstruktur reißfest, so dass sie im gefüllten Zustand auf steilem, glatten Untergrund von wenigstens 30° Neigung bei einer Dicke von wenigstens 5 cm und einer in Neigungsrichtung gemessenen Länge von wenigstens 5 m unter dem Eigengewicht der Träger-Dünger-Kombination nicht reißt, wenn sie nur längs ihres bezüglich der Neigung oberen Rands am Untergrund befestigt ist. Sie besteht vorteilhafterweise aus einem Material, womit auch ein Materialverbund umfasst sein soll, der über zumindest mehrere Jahre witterungsfest, vor allem UV-beständig, und viele Jahre, vorzugsweise Jahrzehnte, verrottungsfest ist. Eine bevorzugte Materialklasse sind synthetische Polymere.

Die Trägerstruktur kann eine starre Struktur sein, beispielsweise ein offenporiger Schaum. Sie kann alternativ zu einem festen Schaum auch eine Gefach mit vielen Längs- und Querstegen sein, die die Fächer des Gefachs bilden. Die Fächer werden mit einem einen Nährboden bildenden Material, beispielsweise Muttererde und Kompost, befüllt. Vor dem Befüllen wird vorzugsweise der Dünger unter dieses Material gemischt. Alternativ kann er auf das bereits eingefüllte Material aufgebracht werden.

In bevorzugter Ausführung ist die Trägerstruktur eine zumindest im ungefüllten Zustand flexible Struktur. Sie kann insbesondere mattenartig sein. Als flexibler Schaum kann sie schwammartig sein. Sie kann Schichten unterschiedlicher Struktur oder aus unterschiedlichen Werkstoffen aufweisen, wobei das Wort "oder" wie auch sonst im Sinne der Erfindung die Bedeutung von "entweder ... oder" und auch die Bedeutung von "und/oder" umfasst. Vorzugsweise ist sie eine Faserstruktur oder umfasst wenigstens eine Faserschicht, beispielsweise ein Gewebe oder Gewirk. Besonders bevorzugt werden Vliesstoffe, die eine oder mehrere Schichten oder in einer bevorzugten Ausführung die Trägerstruktur im Ganzen bilden. Besonders geeignet sind Vliesstoffe, insbesondere Vliesstoffe wie sie bereits von Anwendungen als Abrasionsmittel, beispielsweise Schleifbändern oder -scheiben, bekannt sind. Allerdings ist es für erfindungsgemäße Verwendungen vorteilhaft, wenn die Trägerstruktur eine Dicke von wenigstens mehreren Zentimetern, vorzugsweise wenigstens 10 cm aufweist, damit die Träger-Dünger-Kombination bereits als solche ausreichend Volumen für dichten Bewuchs bietet, beispielsweise für die Bildung einer geschlossenen Grasnarbe.

Abraumhalden, insbesondere stark salzhaltige Halden wie beispielsweise Kälihalden, sind wegen der Auswaschung von Salzen durch Regen problematisch. Die Salze schädigen in einem größeren Umkreis um die Halde den Boden. Daher werden von der Halde abfließenden Niederschläge kanalisiert und in Flüsse abgeleitet, allerdings mit der Folge der Verteilung nur über eine größere Fläche bzw. den Eintrag an einem anderen Ort und auf Kosten der Wasserqualität in den betreffenden Gewässern sowie des Grundwassers im vergrößerten Eintragsgebiet.

Wird solch eine Halde mit einer von der Träger-Dünger-Kombination gebildeten Belagware bedeckt, wenigstens teilweise, kann der Schadstoffaustrag verringert oder verhindert werden. Die Belagware wird auf der Halde ausgelegt, vorzugsweise in Matten- oder Bahnform, und lokal mechanisch mit dem Untergrund verbunden. So können Pflöcke durch die Belagware in den Untergrund getrieben werden, um den Belag zu verankern. Die Pflöcke weisen zweckmäßigerweise Niederhalter auf, um den ausgelegten Belag gegen den Untergrund zu pressen. Die Niederhalter können beispielsweise tellerförmig sein. Die Pflöcke bestehen aus einem witterungsbeständigen und bezüglich des Materials des Untergrunds beständigen Werkstoff, vorzugsweise aus synthetischem Polymermaterial, oder weisen eine Ummantelung aus solch einem Werkstoff auf. Einer flexiblen Belagware wird der Verzug gegeben, um Verwerfungen oder sonstige Änderungen der Geometrie des Untergrunds ausgleichen zu können. Die Trägerstruktur kann wie bereit erwähnt insbesondere eine Faserstruktur, vorzugsweise ein Vliesstoff sein oder eine oder mehrere Schichten einer Faserstruktur aufweisen.

In einer Weiterentwicklung des Verfahrens wird die Oberfläche der Halde versiegelt, vorzugsweise verkieselt. Die Oberflächenversiegelung ist so beschaffen, dass Wasser durch die Versiegelung nicht in den Untergrund eindringen, vorzugsweise aber Wasserdampf austreten kann. Die Träger-Dünger-Belagware wird nach Versiegelung auf der versiegelten Oberfläche ausgelegt und befestigt. In der Anfangsphase verhindert die Versiegelung den Eintritt von Wasser und somit ein Auswaschen des Untergrunds. Der Belag schützt bereits in der Anfangsphase die Versiegelung gegen Witterungseinflüsse wie Sonneneinstrahlung, Wind und Regen. Regenwasser trifft nicht mehr direkt auf die versiegelte Oberfläche, sondern nur noch als Sickerwasser, wobei ein Teil des Niederschlags auf oder in dem Belag abfließt und gar nicht oder erst an einem tiefer gelegenen Ort eines geneigten Untergrunds auf dessen Oberfläche trifft. Hat sich auf dem Belag erst einmal ein Bewuchs gebildet, vorzugsweise eine geschlossene Grasnarbe, schützt der Belag noch wirksamer. Der Bewuchs kann mit Vorteil alternativ bereits vor dem Auslegen auf der Halde erzeugt werden, um eine Ausschwämmung der ausgelegten Trägerstruktur zu verhindern. Bei Wasserüberschuss nach unten abfließendes Wasser wird vorzugsweise aufgefangen und zu einem höheren Ort der Halde zurückgefördert.

In einem Verfahren der Herstellung des Düngers wird Gärgülle, vorzugsweise Biogasgülle einer Biogasanlage verwendet, die Biogas aus Frischgülle und vorzugsweise wenigstens einer weiteren Biofraktion erzeugt, für die Beispiele bereits genannt wurden, etwa nachwachsende Rohstoffe oder Abfälle. Die Gärgülle fällt in solchen Anlagen als Nebenprodukt an und bedarf von Hause aus der Verarbeitung, Lagerung oder Entsorgung. Die Erfindung hingegen erzeugt aus diesem Ausgangsstoff einen hochwertigen multifunktionalen Dünger. Der Gärgülle wird Kieselgur oder Kieselsäure zugemischt. Bevorzugt wird oder werden Kieselgur, gebrannt, oder Kieselsäure, jeweils pulver- oder mehlförmig, als Ausgangsstoff(e) verwendet. Sie wird oder werden vorzugsweise mit der flüssigen Gärgülle gemischt.

Die Gärgülle kann bei dem Mischen mit der Kieselgur oder -säure insbesondere in der Konsistenz vorliegen, in der sie dem Gärbehälter entnommen wird. Alternativ kann ihr vor dem Mischen Flüssigkeit entzogen werden. Sie kann durchaus in einem trockenen, pulverisierten Zustand mit der Kieselgur oder -säure gemischt werden. Der flüssigen Gärgülle oder vorzugsweise dem flüssigen Gemisch aus Gärgülle und Kieselgur oder -säure sowie gegebenenfalls einem oder mehreren weiteren Zuschlagstoff(en) wird die Feuchtigkeit entzogen, mechanisch oder thermisch, beispielsweise durch einen Pressprozess oder Trocknungsprozess, vorzugsweise einer Kombinatin unterschiedlicher Verfahren. So kann die Gärgülle vor dem Mischvorgang oder vorzugsweise die flüssige, die Gärgülle und die Kieselgur oder die Kieselsäure enthaltende Suspension einem Pressprozess, beispielsweise mittels einer Zentrifuge, und anschließend oder gleichzeitig einem Trocknungsprozess mittels Wärmeeintrag oder Konvektion unterzogen werden. Ein bevorzugtes Pressverfahren offenbart die DE 102005030896 A1.

Vorzugsweise wird in einem ersten Schritt die flüssige Gärgülle mit Kieselgur, vorzugsweise gebrannter Kieselgur, vermischt und dann getrocknet. Die Gärgülle dringt in die Hohlräume der Kieselgur ein, wird zumindest zu einem Teil an inneren Oberflächen der Kieselgur adsorbiert und hat bei späterer Einbringung in einen Boden hierdurch eine gewisse Langzeitwirkung. Kieselsäure wird bevorzugt im getrockneten Gemisch aus Gärgülle und Kieselgur zugemischt. Der Kieselsäure kommt die Aufgabe der Wasserbindung und der Verbesserung der Bodenstruktur zu.

Falls der Dünger Gesteinsmehl oder einen anderen weiteren Inhaltsstoff enthält, beispielsweise ein Polyacrylamidpräparat, wird oder werden das Gesteinsmehl oder der betreffende weitere Inhaltsstoff der noch flüssigen Suspension aus Gärgülle und Kieselgur oder Kieselsäure oder dem bereits trockenen Gemisch aus Gärgülle-Trockensubstanz und Kieselgur oder Kieselsäure zugemischt. Die Beimischung kann gleichzeitig oder nach dem Zumischen der Kieselgur oder Kieselsäure, gegebenenfalls auch vorher erfolgen. Das Gesteinsmehl oder ein anderer weiterer Inhaltsstoff wird oder werden vorzugsweise dem trockenen, rieselfähigen Gemisch zugemischt.

Für die Erzeugung der Gärgülle ist von Vorteil, wenn ein Frischgülle und nachwachsende Rohstoffe oder Abfälle enthaltendes Ausgangsgemisch, aus dem durch anaeroben Abbau im Gärbehälter bzw. Fermenter die Gärgülle entsteht, vor dem Abbau bis auf eine maximale Partikelgröße von 2 mm, vorzugsweise weniger, zerkleinert wird. Bevorzugt wird das Ausgangsgemisch vor dem Abbau so behandelt, dass es Partikel nur noch im Submillimeterbereich aufweist. Ein Ausgangsgemisch solch einer sozusagen sahneförmigen Konsistenz wird von den Mikroorganismen besonders gründlich abgebaut, so dass der Anteil der pflanzenverfugbaren Substanzen im Vergleich zu herkömmlichen Gärgülleprodukten erhöht ist. Desweiteren weist die aus solch einem Ausgangsgemisch erzeugte Gärgülle eine vorteilhaft feine Körnigkeit und nach dem Feuchteentzug von Hause aus eine Struktur auf, aus der mit geringem Energieeintrag eine rieselförmige, vorzugsweise pulvrige Masse erzeugt werden kann. Eine Vorrichtung und ein Verfahren für die Erzeugung eines derartigen Ausgangsgemisches werden in den europäischen Patentanmeldungen EP 07 102 358.4 und 07 108 967.6 beschrieben, die diesbezüglich in Bezug genommen werden.

Am Beispiel von Quarzsand wurde eine signifikante Steigerung der Wasserhaltefälogkeit durch Einmischung erfindungsgemäßer Düngerpräparate nachgewiesen. Als besonders vorteilhaft haben sich Dünger erwiesen, die die genannten Inhaltsstoffe in den nachfolgend angegebenen Anteilen enthalten, wobei ein unterer Wert größer Null nicht bedeutet, dass der Dünger den betreffende Inhaltsstoffunumgänglich enthalten muss:

| | |
|---|---|
| GGTS: | 6 bis 20 Gew.% |
| KG, gebrannt: | 20 bis 40 Gew.% |
| KG, getrocknet: | 0 bis 40 Gew.% |
| KS: | 0 bis 40 Gew.% |
| GM: | 10 bis 40 Gew.% |
| PAA: | 0 bis 3 Gew.% |

### Präparat 1:

300 g flüssige Gärgülle in einer Konsistenz, wie sie in einem gleichmäßig durchmischten Gärbehälter vorliegt, werden mit 100 g gebrannter Kieselgur (Terramol der Fa. Diamon, Hamburg, Deutschland) gleichmäßig gemischt und eingetrocknet. Das trockene Gemisch enthält in homogener Verteilung 20 g Gärgülle-Trockensubstanz und 100 g Kieselgur. Das trockene Gemisch bildet einen Basisdünger, der bereits von Hause aus pulverförmig ist oder pulverisiert wird.

### Präparat 2:

1000 g des pulverförmigen Basisdüngers (Präparat 1) werden mit 830 g Kieselgur, getrocknet, (TE 20G Terramol der Fa. Diamon, Hamburg, Deutschland) gleichmäßig gemischt.

### Präparat 3:

1000 g des pulverförmigen Präparats 2 werden mit 324 g Basaltmehl gleichmäßig gemischt.

### Präparat 4:

1000 g des pulverförmigen Basisdüngers (Präparat 1) werden mit 830 g mehlartiger Kieselsäure (Sipernat S820, Degussa AG, Deutschland) gleichmäßig gemischt.

### Präparat 5:

1000 g des pulverförmigen Präparats 4 werden mit 324 g Basaltmehl gleichmäßig gemischt.

### Präparate 6:

100 g des pulverförmigen Präparats 3 werden mit variierendem Anteil, maximal 2 g, eines Polyacrylamidpräparats (Stockosorb, Degussa AG) gleichmäßig gemischt.

### Präparate 7:

100 g des pulverförmigen Präparats 5 werden mit variierendem Anteil, maximal 2 g, eines Polyacrylamidpräparats (Stockosorb, Degussa AG) gleichmäßig gemischt.

In einer ersten Versuchsreihe wurde Quarzsand mit dem Präparat 3 in unterschiedlichen Anteilen gemischt und die nutzbare Feldkapazität nFK in Vol.% ermittelt. Das Ergebnis der Versuchsreihe ist in Diagramm 1 dargestellt.

In einer zweiten ersten Versuchsreihe wurde Quarzsand mit dem Präparat 5 in unterschiedlichen Anteilen gemischt und die nutzbare Feldkapazität nFK in Vol.% ermittelt. Das Ergebnis der Versuchsreihe ist in Diagramm 2 dargestellt.

Die nutzbare Feldkapazität ist ein Maß für den in einem Boden vorhandenen, von Pflanzen nutzbaren Wasseranteil, der einerseits nicht aufgrund der Schwerkraft aus der für Pflanzen zugänglichen Bodenschicht in tiefere Schichten sickert, andererseits aber auch nicht durch Kapillar- oder sonstige Kräfte im Boden so fest gehalten wird, dass Pflanzen ihn nicht fordern und nutzen können. Die nutzbare Feldkapazität wird unter Standardbedingungen ermittelt und in Vol.% Wasser in einem bestimmten Volumen eines Probenmaterials angegeben. Dem Probenmaterial wird Wasser bis zur Sättigung zugegeben. Die mit Wasser gesättigte Probe wird unter einen geringen äußeren Überdruck von 62 mbar gesetzt, um das Versickern zu simulieren. Die Probe mit dem noch darin verbliebenen Wasser wird anschließend mit einem äußeren Druck von 15 bar beaufschlagt. Das bei diesem Druck austretende Wasser entspricht dem Anteil des Wassers, den Pflanzen nutzen können.

Die nutzbare Feldkapazität wurde für den Quarzsand ohne Zusatz (QS) und für Gemische ermittelt, die je den Quarzsand und entweder das Präparat 3 oder das Präparat 5 gleichmäßig verteilt enthalten. Für vier der Gemische mit Präparat 3 ist die nutzbare Feldkapazität in dem Diagramm 1 und für vier der Gemische mit Präparat 5 ist die nutzbare Feldkapazität in dem Diagramm 2 dargestellt. Dabei bedeuten

| | |
|---|---|
| QS: | Quarzsand ohne Zusatz |
| QS + 0,5 P: | 0,5 g des jeweiligen Präparats auf 100 g Quarzsand |
| QS + 1 P: | 1 g des jeweiligen Präparats auf 100 g Quarzsand |
| QS + 2 P: | 2 g des jeweiligen Präparats auf 100 g Quarzsand |
| QS + 5 P: | 5 g des jeweiligen Präparats auf 100 g Quarzsand |

In einer in Diagramm 3 dargestellten dritten Versuchsreihe wurde Quarzsand gleichmäßig jeweils mit einem der Präparate 6 gemischt. In den Mischungen sind die Anteile in Gew.% Quarzsand und Präparat jeweils die gleichen, nämlich 2 g des jeweiligen Präparats 6 auf 100 g Quarzsand. Es variiert nur der Anteil des Polyacrylamids (PAA). Für den Quarzsand als solchen und drei der Gemische ist der Anteil des aufgenommenen und unter Schwerkraft gehaltenen Wassers der jeweiligen Probe in Vol.% dargestellt. Dabei bedeuten

| | |
|---|---|
| QS: | Quarzsand ohne Zusatz |
| 0,05% PAA: | 100 g QS + 2 g Präparat 6, davon 0,05 Gew.% PAA |
| 0,1% PAA: | 100 g QS + 2 g Präparat 6, davon 0,1 Gew.% PAA |
| 0,15% PAA: | 100 g QS + 2 g Präparat 6, davon 0,15 Gew.% PAA |

Die Beispiele zeigen, dass die Beimischung eines Düngers, der Gärgülle-Trockensubstanz und Kieselgur enthält, eine signifikante Steigerung der Wasserhaltefähigkeit arider Böden erwarten lässt. Bereits für 0, 5 Gew.% des GGTS/KG-Präparats 3 wurde bei Quarzsand eine Steigerung von 20 % erzielt. Eine Beimischung dieses Präparats mit 2 Gew.% bringt bei Quarzsand bereits eine Steigerung von mehr als 50%. Kieselsäure steigert die Wasserhaltefähigkeit nochmals, ebenso bereits geringe Mengen Polyacrylamid.

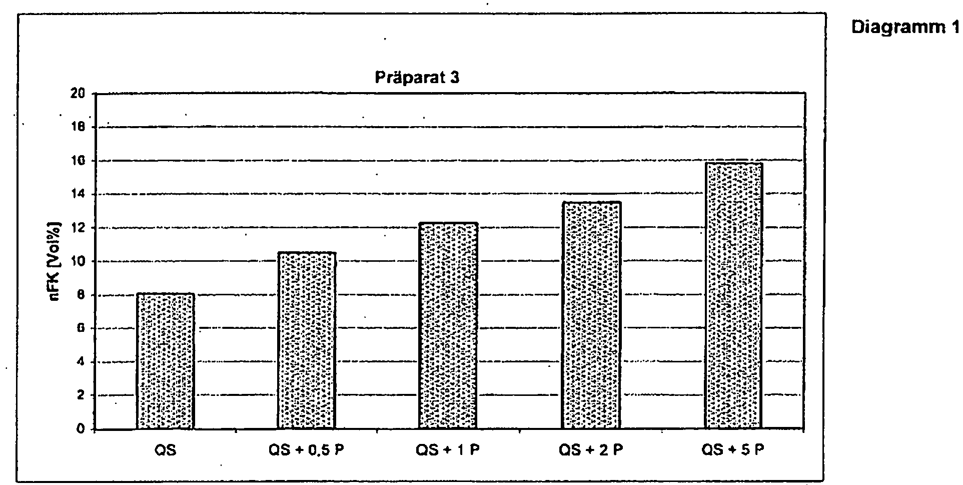

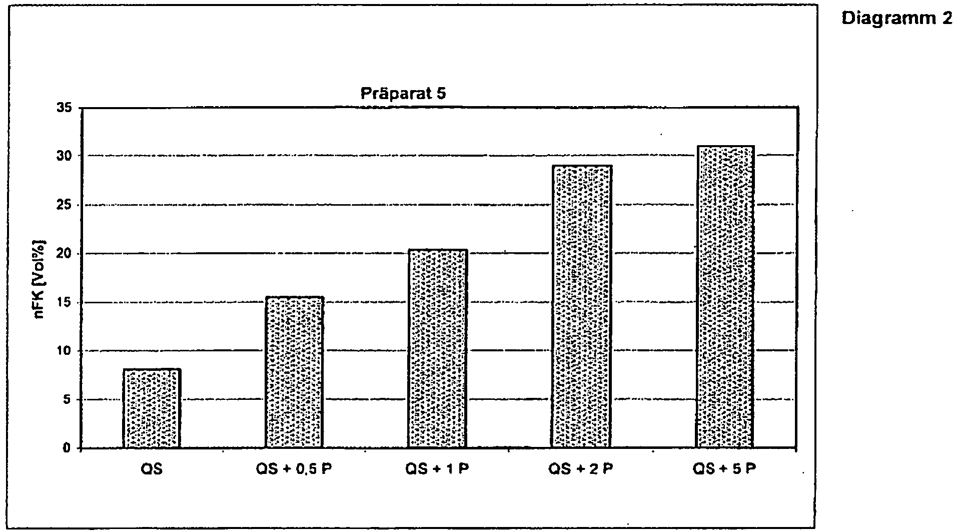

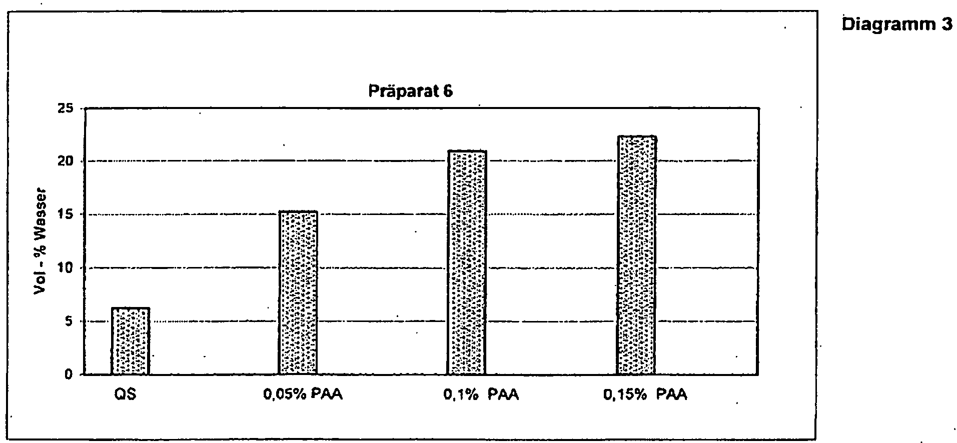

## Patentansprüche

1. Dünger, der in Mischung fein verteilt Gärgülle-Trockensubstanz und wenigstens eines aus Kieselgur und Kieselsäure enthält, **dadurch gekennzeichnet, dass** er rieselfähig ist, die Mischung wenigstens 4 Gew.% Gärgülle-Trockensubstanz und wenigstens 10 Gew.%, Kieselgur oder Kieselsäure enthält, wobei die Gärgülle erhalten wird, indem Gülle oder Festmist gemeinsam mit einer oder mehreren anderen Biomassen anaerob vergoren wird.

2. Dünger nach Anspruch 1, **dadurch gekennzeichnet, dass** die Mischung wenigstens 5 Gew.% Gärgülle-Trockensubstanz enthält.

3. Dünger nach einem der vorhergehenden Ansprüche, **dadurch gekennzeichnet, dass** die Mischung wenigstens 20 Gew.% Kieselgur oder Kieselsäure enthält.

4. Dünger nach einem der vorhergehenden Ansprüche und wenigstens einem der folgenden Merkmale:
- die Mischung enthält die Gärgülle-Trockensubstanz und die Kieselgur in einem Gewichtsverhältnis von mindestens 1:16, vorzugsweise mindestens 1:12,
- die Mischung enthält die Gärgülle-Trockensubstanz und die Kieselgur in einem Gewichtsverhältnis von höchstens 2:1, vorzugsweise höchstens 1:1,
- die Mischung enthält die Gärgülle-Trockensubstanz und die Kieselsäure in einem Gewichtsverhältnis von mindestens 1:8, vorzugsweise mindestens 1:6,
- die Mischung enthält die Gärgülle-Trockensubstanz und die Kieselsäure in einem Gewichtsverhältnis von höchstens 2:1, vorzugsweise höchstens 1:1.

5. Dünger nach wenigstens einem der vorhergehenden Ansprüche und wenigstens einem der folgenden Merkmale:
- die Mischung enthält fein verteilt Gesteinsmehl,
- die Mischung enthält fein verteilt wenigstens 5 Gew.%, vorzugsweise wenigstens 10 Gew.% Gesteinsmehl,
- die Mischung enthält fein verteilt höchstens 60 Gew.%, vorzugsweise höchstens 40 Gew.% Gesteinsmehl.

6. Dünger nach dem vorhergehenden Anspruch und wenigstens einem der folgenden Merkmale:
- der Gewichtsanteil des Gesteinsmehls beträgt wenigstens ein Zehntel, vorzugsweise wenigstens ein Sechstel des vereinigten Gewichtsanteils der Gärgülle-Trockensubstanz und der Kieselgur,
- der Gewichtsanteil des Gesteinsmehls ist höchstens viermal so groß, vorzugsweise höchstens dreimal so groß, wie der vereinigte Gewichtsanteil der Gärgülle-Trockensubstanz und der Kieselgur,
- der Gewichtsanteil des Gesteinsmehls beträgt wenigstens ein Fünftel, vorzugsweise wenigstens ein Drittel des vereinigten Gewichtsanteils der Gärgülle-Trockensubstanz und der Kieselsäure,
- der Gewichtsanteil des Gesteinsmehls ist höchstens viermal so groß, vorzugsweise höchstens dreimal so groß, wie der vereinigte Gewichtsanteil der Gärgülle-Trockensubstanz und der Kieselsäure.

7. Dünger nach dem vorhergehenden Anspruch, **dadurch gekennzeichnet, dass** der Gewichtsanteil der Kieselgur wenigstens 0.3 mal so groß, vorzugsweise wenigstens 0.5 mal so groß wie der Gewichtsanteil der Kieselsäure ist.

8. Dünger nach einem der vorhergehenden Ansprüche und wenigstens einem der folgenden Merkmale:
- die Mischung enthält Pflanzensamen,
- die Mischung enthält Hydrogel, vorzugsweise mit einem Anteil von höchstens 3 Gew.%,
- die Mischung enthält Polyacrylamid, vorzugsweise mit einem Anteil von höchstens 3 Gew.%.

9. Dünger nach einem der vorhergehenden Ansprüche, **dadurch gekennzeichnet, dass** er pulver- oder mehlförmig ist.

10. Dünger nach einem der vorhergehenden Ansprüche, **dadurch gekennzeichnet, dass** er zur Steigerung der Wasserhaltekapazität eines Bodens, vorzugsweise eines Bodens in einem ariden Gebiet, verwendet wird.

11. Dünger nach einem der vorhergehenden Ansprüche, **dadurch gekennzeichnet, dass** er einem Bodenmaterial in solch einer Menge gleichmäßig zugemischt wird, dass sein Anteil im Gemisch aus Bodenmaterial und Dünger wenigstens 0,5 Gew.% und höchstens 10 Gew.%, vorzugsweise höchstens 7 Gew.% beträgt.

12. Kombination des Düngers nach einem der vorhergehenden Ansprüche und einer offenporigen Trägerstruktur, in welcher der Dünger verteilt ist und wenigstens einem der folgenden Merkmale:
- die Trägerstruktur ist eine Faserstruktur oder weist wenigstens eine als Faserstruktur gebildete Schicht auf,
- die Trägerstruktur enthält oder besteht aus Fasern, die synthetisches Polymermaterial zumindest in einem überwiegenden Gewichts- oder Volumenanteil enthalten,
- die Trägerstruktur ist ein Vliesstoff oder weist wenigstens eine als Vliesstoff gebildete Schicht auf.

13. Kombination nach dem vorhergehenden Anspruch und wenigstens einem der folgenden Merkmale:
- die Trägerstruktur ist eine Matte oder flexible Bahn und die Kombination, vorzugsweise auch bereits die Trägerstruktur als solche, weist eine Dicke von wenigstens mehreren Zentimetern auf,
- die Trägerstruktur besteht aus einem Material oder Materialkonglomerat, das synthetisches Polymermaterial ausschließlich oder in einem überwiegenden Gewichts- oder Volumenanteil enthält.

14. Kombination nach einem der vorhergehenden Ansprüche **dadurch gekennzeichnet, dass** die Trägerstruktur mit dem eingebetteten Dünger zur Abdeckung, optional Bepflanzung, eines stark salzhaltigen Untergrunds, vorzugsweise eines geneigten Untergrunds, oder einer Halde verwendet wird.

15. Kombination nach dem vorhergehenden Anspruch, **dadurch gekennzeichnet, dass** der Untergrund oder die Halde gegen Wassereintritt versiegelt, vorzugsweise verkieselt wird.

16. Verfahren zur Herstellung einer Kombination gemäß einem der Ansprüche 12-15, **dadurch gekennzeichnet, dass** der Dünger gemäß einem der Ansprüche 1-12 in eine vorgefertigte Trägerstruktur eingebracht wird.

17. Verfahren nach dem vorhergehenden Anspruch, bei dem die Trägerstruktur mit einer den Dünger enthaltenden wässrigen Suspension getränkt oder mit dem Dünger belegt und der Dünger mit Wasser oder einer wasserhaltigen Flüssigkeit eingeschwämmt wird und dass der Trägerstruktur zumindest ein größerer Teil der aufgenommenen Flüssigkeit wieder entzogen wird.

18. Verfahren zur Herstellung des Düngers nach einem der vorhergehenden Ansprüche, bei dem flüssige oder breiige Gärgülle mit Kieselgur oder Kieselsäure, optional zusätzlich mit wenigstens einem aus Gesteinsmehl und Hydrogel, vorzugsweise Polyacrylamid, gemischt und die Mischung eingetrocknet wird, wobei die Kieselgur oder Kieselsäure als Pulver oder Mehl mit der Gärgülle gemischt wird, und wobei
- entweder dem flüssigen oder breiigen, die Gärgülle und Kieselgur enthaltenden Gemisch Flüssigkeit entzogen und das trockene Gemisch mit wenigstens einem aus Gesteinsmehl und Kieselsäure gemischt wird
- oder dem flüssigen oder breiigen, die Gärgülle und Kieselsäure enthaltenden Gemisch Flüssigkeit entzogen und das trockene Gemisch mit wenigstens einem aus Gesteinsmehl und Kieselgur gemischt wird.

19. Verfahren nach einem der vorhergehenden Ansprüche, wobei die Gärgülle im Dünger, vorzugsweise bereits die flüssige oder breiige Gärgülle, nur Feststoffe maximal mit einer Erstreckung von 2 mm, vorzugsweise maximal 1 mm, aufweist.

## Claims

1. Fertiliser, which contains in a mixture finely dispersed fermented manure dry matter and at least one of diatomaceous earth and silicic acid, **characterised in that** it is free flowing, the mixture containing at least 4 wt.% fermented manure dry matter and at least 10 wt.% diatomaceous earth or silicic acid, wherein the fermented manure is obtained **in that** manure or solid dung is fermented anaerobically with one or more additional biomass.

2. Fertiliser according to claim 1, **characterised in that** the mixture contains at least 5 wt.% fermented manure dry matter.

3. Fertiliser according to any one of the preceding claims, **characterised in that** the mixture contains at least 20 wt.% diatomaceous earth or silicic acid.

4. Fertiliser according to any one of the preceding claims and at least one of the following features:
- the mixture contains the fermented manure dry matter and the diatomaceous earth in a weight ratio of at least 1:16, preferably at least 1:12,
- the mixture contains the fermented manure dry matter and the diatomaceous earth in a weight ratio of at most 2:1, preferably at most 1:1,
- the mixture contains the fermented manure dry matter and the silicic acid in a weight ratio of at least 1:8, preferably at least 1:6,
- the mixture contains the fermented manure dry matter and the silicic acid in a weight ratio of at most 2:1, preferably at most 1:1.

5. Fertiliser according to at least one of the preceding claims and at least one of the following features:
- the mixture contains finely dispersed rock flour,
- the mixture contains at least 5 wt.%, preferably at least 10 wt.% finely dispersed rock flour,
- the mixture contains at most 60 wt.%, preferably at most 40 wt.% finely dispersed rock flour.

6. Fertiliser according to the preceding claim and at least one of the following features:
- the weight proportion of the rock flour is at least a tenth, preferably at least a sixth of the combined weight proportion of the fermented manure dry matter and the diatomaceous earth,
- the weight proportion of the rock flour is at most four times as large, preferably at most three times as large, as the combined weight proportion of the fermented manure dry matter and the diatomaceous earth,
- the weight proportion of the rock flour is at least a fifth, preferably at least a third of the combined weight proportion of the fermented manure dry matter and the silicic acid,
- the weight proportion of the rock flour is at most four times as large, preferably at most three times as large, as the combined weight proportion of the fermented manure dry matter and the silicic acid.

7. Fertiliser according to the preceding claim, **characterised in that** the weight proportion of the diatomaceous earth is at least 0.3 times as large, preferably at least 0.5 times as large as the weight proportion of the silicic acid.

8. Fertiliser according to any one of the preceding claims and at least one of the following features:
- the mixture contains plant seeds,
- the mixture contains hydrogel, preferably in a proportion of at most 3 wt.%,
- the mixture contains polyacrylamide, preferably in a proportion of at most 3 wt.%.

9. Fertiliser according to any one of the preceding claims, **characterised in that** it is preferably in a powdered or flour form.

10. Fertiliser according to any one of the preceding claims, **characterised in that** it is used for increasing the water retention capacity of a soil, preferably a soil in an arid area.

11. Fertiliser according to any one of the preceding claims, **characterised in that** it is mixed evenly into soil material in such an amount that its proportion in the mixture of soil material and fertiliser is at least 0.5 wt.% and at most 10 wt.%, preferably at most 7 wt.%.

12. Combination of fertiliser according to any one of the preceding claims and an open-pored carrier structure, in which the fertiliser is dispersed and at least one of the following features:
- the carrier structure is a fibrous structure or comprises at least one layer in the form of a fibrous structure,
- the carrier structure contains or consists of fibres which contain synthetic polymer material at least as the main proportion of the weight or volume,
- the carrier structure is a fleece material or comprises at least one layer in the form of a fleece material.

13. Combination according to the preceding claim and at least one of the following features:
- the carrier structure is a mat or flexible sheet and the combination, preferably also the carrier structure as such, has a thickness of at least several centimetres,
- the carrier structure consists of a material or material conglomerate that contains solely synthetic polymer material or synthetic polymer material as a main proportion of the weight or volume.

14. Combination according to any one of the preceding claims, **characterised in that** the carrier structure is used with the embedded fertiliser for covering, optionally planting a heavily salinated subsoil, preferably a sloping subsoil, or a heap.

15. Combination according to the preceding claim, **characterised in that** the subsoil or the heap is sealed from the penetration of water, preferably silicified.

16. Method for producing a combination according to any one of claims 12-15, **characterised in that** the fertiliser according to any one of claims 1-12 is introduced into a prefabricated carrier structure.

17. Method according to the preceding claim, in which the carrier structure is impregnated with an aqueous suspension containing the fertiliser or covered with the fertiliser and the fertiliser is washed with water or a water-containing liquid and at least a greater proportion of the taken up fluid is removed again from the carrier structure.

18. Method for producing the fertiliser according to any one of the preceding claims in which fluid or mushy fermented manure is mixed with diatomaceous earth or silicic acid, optionally in addition to at least one of rock flour and hydrogel, preferably polyacrylamide, and the mixture is dried, wherein the diatomaceous earth or silicic acid is mixed as powder or flour with the fermented manure, and wherein
- either liquid is removed from the liquid or mushy mixture containing the fermented manure and diatomaceous earth and the dried mixture is mixed with at least one of rock flour and silicic acid
- or liquid is removed from the liquid or mushy mixture containing fermented manure and silicic acid and the dried mixture is mixed with at least one of rock flour and diatomaceous earth.

19. Method according to any one of the preceding claims, wherein the fermented manure in the fertiliser, preferably the liquid or mushy fermented manure, only comprises solids with a maximum dimension of 2 mm, preferably a maximum of 1 mm.

## Revendications

1. Engrais, qui contient en mélange une substance sèche de lisier fermenté finement dispersée et au moins un élément parmi la terre à diatomées et l'acide silicique, **caractérisé en ce qu'**il est à écoulement facile, le mélange contient au moins 4 % en poids d'une substance sèche de lisier fermenté et au moins 10 % en poids de terre à diatomées ou d'acide silicique, le lisier fermenté étant obtenu **en ce que** le lisier ou le fumier solide est fermenté en anaérobie conjointement avec une ou plusieurs biomasses différentes.

2. Engrais selon la revendication 1, **caractérisé en ce que** le mélange contient au moins 5 % en poids d'une substance sèche de lisier fermenté.

3. Engrais selon l'une quelconque des revendications précédentes, **caractérisé en ce que** le mélange contient au moins 20 % en poids de terre à diatomées ou d'acide silicique.

4. Engrais selon l'une quelconque des revendications précédentes et selon au moins l'une des caractéristiques suivantes :
- le mélange contient la substance sèche de lisier fermenté et la terre à diatomées selon un rapport en poids d'au moins 1:16, de préférence d'au moins 1:12,
- le mélange contient la substance de sèche de lisier fermenté et la terre à diatomées selon un rapport en poids de maximum 2:1, de préférence de maximum 1:1,
- le mélange contient la substance sèche de lisier fermenté et l'acide silicique selon un rapport de poids d'au moins 1:8, de préférence d'au moins 1:6,
- le mélange contient la substance sèche de lisier fermenté et l'acide silicique selon un rapport de poids de maximum 2:1, de préférence de maximum 1:1.

5. Engrais selon au moins l'une quelconque des revendications précédentes et selon au moins l'une des caractéristiques suivantes :
- le mélange contient de la poudre de roche finement dispersée,
- le mélange contient au moins 5 % en poids, de préférence au moins 10 % en poids, de poudre de roche finement dispersée,
- le mélange contient au maximum 60 % en poids, de préférence au maximum 40 % en poids, de poudre de roche finement dispersée.

6. Engrais selon la revendication précédente et selon au moins l'une des caractéristiques suivantes :
- la proportion en poids de la poudre de roche présente une valeur égale au moins à un dixième, de préférence une valeur égale au moins à un sixième, de la proportion en poids cumulée de la substance sèche de lisier fermenté et de la terre à diatomées,
- la proportion en poids de la poudre de roche est au maximum quatre fois plus grande, de préférence au maximum trois fois plus grande, que la proportion en poids cumulée de la substance sèche de lisier fermenté et de la terre à diatomées,
- la proportion en poids de la poudre de roche présente une valeur égale au moins à un cinquième, de préférence une valeur égale au moins à un tiers de la proportion en poids cumulée de la substance sèche de lisier fermenté et de l'acide silicique,
- la proportion en poids de la poudre de roche est au maximum quatre fois plus grande, de préférence au maximum trois fois plus grande que la proportion en poids cumulée de la substance sèche de lisier fermenté et de l'acide silicique.

7. Engrais selon la revendication précédente, **caractérisé en ce que** la proportion en poids de la terre à diatomées est au moins à 0,3 fois plus grande, de préférence au moins 0,5 fois plus grande que la proportion en poids de l'acide silicique.

8. Engrais selon l'une quelconque des revendications précédentes et selon au moins l'une des caractéristiques suivantes :
- le mélange contient des graines de plante,
- le mélange contient de l'hydrogel, de préférence en une proportion de 3 % en poids au maximum,
- le mélange contient du polyacrylamide, de préférence en une proportion de 3 % en poids au maximum.

9. Engrais selon l'une quelconque des revendications précédentes, **caractérisé en ce qu'**il se présente sous une forme de poudre ou de farine.

10. Engrais selon l'une quelconque des revendications précédentes, **caractérisé en ce qu'**il est utilisé afin d'améliorer la capacité de rétention d'eau d'un sol, en particulier d'un sol dans une région aride.

11. Engrais selon l'une quelconque des revendications précédentes, **caractérisé en ce qu'**il est mélangé de manière homogène à un matériau de sol en une quantité telle que sa proportion dans le mélange composé du matériau de sol et de l'engrais est d'au moins 0,5 % en poids et au maximum de 10 % en poids, de préférence est au maximum de 7 % en poids.

12. Combinaison de l'engrais selon l'une quelconque des revendications précédentes et selon une structure de support à pores ouverts, dans laquelle l'engrais est dispersé et selon au moins l'une des caractéristiques suivantes :
- la structure de support est une structure à base de fibres ou présente au moins une couche formée sous la forme d'une structure à base de fibres,
- la structure de support contient ou est constituée de fibres, qui contiennent un matériau polymère synthétique au moins en une proportion de poids ou de volume majoritaire,
- la structure de support est un tissu non-tissé ou présente au moins une couche formée sous la forme d'un tissu non-tissé.

13. Combinaison selon la revendication précédente et selon au moins l'une des caractéristiques suivantes :
- la structure de support est une nappe ou une bande flexible et la combinaison, de préférence déjà la structure de support en tant que telle, présente une épaisseur d'au moins plusieurs centimètres,
- la structure de support est constituée d'un matériau ou d'un conglomérat de matériaux, qui contient un matériau polymère synthétique exclusivement ou en une proportion de poids ou de volume majoritaire.

14. Combinaison selon l'une quelconque des revendications précédentes, **caractérisée en ce que** la structure de support comprenant l'engrais incorporé est utilisée à des fins de recouvrement, en option de plantation, d'un sous-sol fortement salin, de préférence d'un sous-sol incliné ou d'une pente.

15. Combinaison selon la revendication précédente, **caractérisée en ce que** le sous-sol ou la pente est scellé(e), de préférence silicifié(e), pour empêcher l'eau de s'infiltrer.

16. Procédé servant à produire une combinaison selon l'une quelconque des revendications 12 à 15, **caractérisé en ce que** l'engrais selon l'une quelconque des revendications 1 à 12 est introduit dans une structure de support préfabriquée.

17. Procédé selon la revendication précédente, où la structure de support est imprégnée d'une suspension aqueuse contenant l'engrais ou est chargée en l'engrais et l'engrais est immergé dans de l'eau ou un liquide contenant de l'eau, et en ce qu'au moins une plus grande partie du liquide absorbé est à nouveau prélevée de la structure de support.

18. Procédé servant à produire l'engrais selon l'une quelconque des revendications précédentes, où du lisier fermenté liquide ou visqueux est mélangé à de la terre à diatomées ou à de l'acide silicique, en option en supplément à au moins un élément parmi la poudre de roche et l'hydrogel, de préférence le polyacrylamide, et en ce que le mélange est séché, la terre à diatomées ou l'acide silicique étant mélangée/mélangé à du lisier fermenté sous la forme d'une poudre ou d'une farine, et
- le liquide étant prélevé du mélange liquide ou visqueux contenant le lisier fermenté et la terre à diatomées et le mélange sec étant mélangé à au moins un élément parmi la poudre de roche et l'acide silicique,
- ou le liquide étant prélevé du mélange liquide ou visqueux contenant la terre à diatomées et l'acide silicique et le mélange sec étant mélangé à au moins un élément parmi la poudre de roche et la terre à diatomées.

19. Procédé selon l'une quelconque des revendications précédentes, le lisier fermenté dans l'engrais, de préférence le lisier fermenté liquide ou visqueux déjà, présentant uniquement des matières solides comprenant une extension de 2 mm au maximum, de préférence une extension de 1 mm au maximum.
